# EUROPEAN PATENT APPLICATION

(11) **EP 2 863 398 A1**
(43) Date of publication of application: **22.04.2015**
(21) Application number: 13306432.9
(22) Date of filing: 18.10.2013
(51) Int. Cl.: H01B 7/285

(54) **Water and gas tight stranded conductor and umbilical comprising this**

(71) Applicant: Nexans, 75008 Paris (FR)
(72) Inventor: Hassel, Arild, 3033 Drammen (NO)
(74) Representative: Feray, Valérie

(57) **Abstract**

The present invention provides an electrical conductor (1) comprising a core of multiple stranded bare wires (2) and an insulating layer (4) surrounding the core, wherein substantially all interstices and/or spaces (3) between the bare wires are filled with a water immiscible viscous fluid (4), such as a jelly or gel; and a method for manufacturing such a conductor.

## Description

The present invention relates to subsea cables or umbilicals, and more specific to electrical conductors, cables or umbilicals which are terminated subsea.

### Background

In recent years, subsea terminated cables, typically used in the off-shore oil and gas industry, have been found to experience problems due to longitudinal gas pressure build-up. The built-up gas pressure may be even higher than the ambient water pressure, and causes insulation/resistance problems in the electrical termination. This problem is especially relevant for small electric power elements, such as Quads and Pair Triples, typically used in control umbilicals for oil and gas wells.

There are presently no adequate solutions to this problem, and the object of the present invention is to provide an electrical conductor and a cable/umbilical, wherein problems due to longitudinal gas pressure build-up are mitigated or eliminated.

FR 2489034 discloses a telecommunication cable, wherein a core of stranded insulated wires is impregnated with an impregnation material such as petroleum jelly or paraffin.

### Summary of the invention

The present invention avoids the problem of longitudinal gas pressure build-up by providing an electrical conductor having a longitudinal filling inside the insulation system. By providing a longitudinal filling, water and gas transportation within the electrical conductor, and thus within a cable/umbilical, as well as the formation of undesired gases, are reduced or eliminated. The invention is specified in the attached claims, and in the following:
In one aspect, the invention concerns an electrical conductor comprising a core of multiple stranded bare wires and an insulating layer surrounding the core, wherein interstices and/or spaces between the wires are filled with a water immiscible viscous fluid, such as a jelly or gel.

The term "bare wire" is intended to mean a wire lacking any external insulation. The use of bare wires is an essential feature of the electrical conductor according to the invention. The stranded bare wires are in direct electrical contact which each other. Any external insulation of the individual wires prior to stranding would prevent the water immiscible fluid from getting into direct contact with the conducting material of the individual bare wires and thereby filling the interstices there between. Further any insulation would stop the water immiscible fluid from filling any spaces between the bare wire and the insulation layer.

In an embodiment of the conductor according to the invention, the viscous fluid is chosen from the group comprising Vaseline, petroleum jelly, thermoplastic petroleum jelly and silicone grease.

In an embodiment of the conductor according to the invention, the stranded wires are made in a material having an electric conductivity of at least 30 Sm/mm², at least 35 Sm/mm², at least 50 Sm/mm², or at least 55 Sm/mm².

In an embodiment of the conductor according to the invention, the stranded wires are made of copper, copper alloy, aluminium or aluminium alloy.

In an embodiment of the conductor according to the invention, the core comprises seven or nineteen stranded wires.

In a further aspect, the invention concerns the use of a conductor according to the invention in the manufacture of an umbilical. Preferably, the umbilical is for subsea application, wherein a subsea termination is required.

In yet a further aspect, the invention concerns an umbilical for subsea termination comprising at least one electrical conductor according to the invention and optionally at least one of the elements belonging to the group comprising armoring wire, optical fiber line, fluid line and signal line.

In yet a further aspect, the invention concerns a method for manufacturing an electrical conductor according to the invention, comprising the steps of passing the core through a chamber containing a water immiscible viscous fluid before adding the outer insulating layer.

In an embodiment of the method according to the invention, the water immiscible viscous fluid comprises Vaseline, petroleum jelly, thermoplastic petroleum jelly and/or silicone grease.

In the present application the terms cable and umbilical are used interchangeably. The term "electrical conductor" is intended to encompass both signal conductors and power conductors.

### Short description of the drawings

Figure 1 shows a cross sectional view of one embodiment of a conductor according to the invention.
Figure 2 shows a cross sectional view of one embodiment of a cable according to the invention.
Figure 3 illustrates schematically a cross sectional view of an umbilical according to the present invention.

### Detailed description of the invention

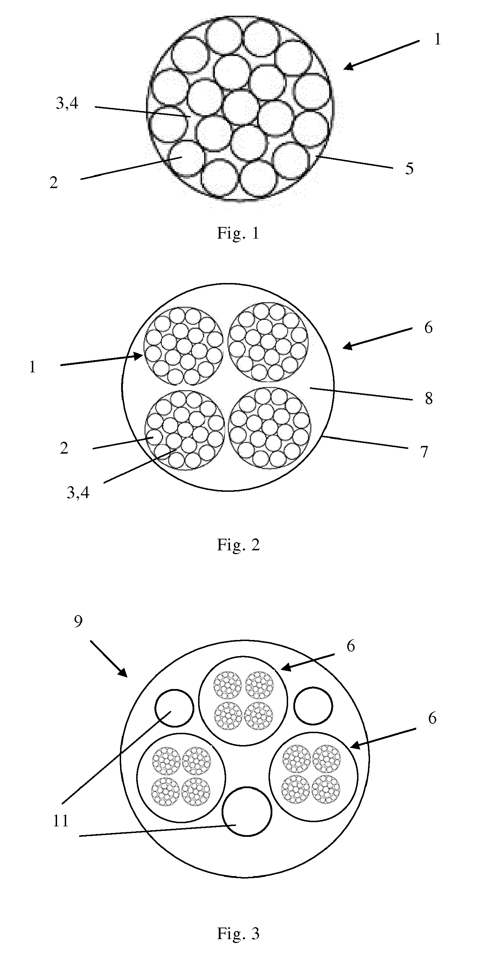

A typical electrical conductor 1 according to the invention is shown in fig. 1. The electrical conductor comprises a core made up of multiple bare wires 2 which are stranded together, and the core is surrounded by an insulating layer system 5. In this particular embodiment, the conductor comprises 19 wires, but the present invention is suitable for conductors having any number of multiple wires. For instance, seven wires are commonly used to manufacture an electrical conductor. The insulating layer system may comprise up to at least three different insulating layers. The wires 2 are made in a conductive material, such as copper, aluminium, or various alloys thereof. The stranding of multiple bare wires inevitably leads to the formation of longitudinal interstices/spaces 3 between the wires 2. In prior art cables, unwanted gas may be transported through these spaces/interstices. This longitudinal transportation of gases is what ultimately leads to the gas pressure build-up which causes problems due to insulation/resistance in the electrical termination of the conductor. However, in the conductor 1 according to the invention, these interstices/spaces 3 are filled with a water immiscible, and substantially incompressible, jelly or gel 4. The jelly/gel prevents, or mitigates, the formation of unwanted gas in the interstices 3 (by covering the surface of the wires, thus isolating them from contact with water) as well as the transportation of any gas along the stranded wires.

A typical cable 6 according to the invention is shown in figure 2. In this embodiment, the cable 6 comprises at least one exterior sheath 7 and four power conductors 1 as shown in fig. 1 (commonly referred to as a quad). The cable comprises individual insulation around each of the four conductors. The space 8 between the insulated power conductors and the exterior sheath is filled with a suitable filler material. Suitable filler materials are known to the skilled person, and include materials such as silicone and petroleum jelly. Other embodiments, comprising various numbers of conductors, and/or wherein the cable/umbilical comprises additional elements, such as armoring wires, optical fibers etc. are envisioned and within the scope of the present invention.

Figure 3 illustrate an umbilical 9 comprising three quads/cables 6 as illustrated on figure 2 combined with three additional cables or tubes 11 for transferring signals or fluids. Figure 3 is only illustrative for the possible configuration of an umbilical, as the umbilical may comprise any number of power cables, signal cables or fluid tubes and the power cables may be quads as illustrated, or any combination of one or more conductor core elements forming a cable. According to the present invention the one or more electrical conductors comprise a core of multiple stranded bare wires, wherein substantially all interstices and/or spaces between the bare wires are filled with a water immiscible viscous fluid.

The conductor according to the invention may be manufactured by for instance a method similar to the one disclosed by FR 2489034. In said document, a core of stranded isolated wires is impregnated by passing the core through a chamber filled with a suitable impregnating material. To provide a conductor according to the present invention, the core of the conductor, i.e. the stranded non-isolated wires, is passed through a chamber containing the suitable viscous water immiscible fluid. Preferably the viscous fluid, for instance Vaseline, petroleum jelly, thermoplastic petroleum jelly or silicone grease, is heated in the chamber to facilitate the process of filling up all of the interstices/spaces.

## Claims

1. An electrical conductor (1) comprising a core of multiple stranded bare wires (2) and an insulating layer (4) surrounding the core, wherein substantially all interstices and/or spaces (3) between the bare wires are filled with a water immiscible viscous fluid (4), such as a jelly or gel.

2. A conductor according to claim 1, wherein the viscous fluid (4) is chosen from the group comprising Vaseline, petroleum jelly, thermoplastic petroleum jelly and silicone grease.

3. A conductor according to any of the preceding claims, wherein the stranded bare wires are made in a material having an electric conductivity of at least 30 Sm/mm², at least 35 Sm/mm², at least 50 Sm/mm², or at least 55 Sm/mm².

4. A conductor according to any of the preceding claims, wherein the stranded bare wires (2) are made of copper, copper alloy, aluminium or aluminium alloy.

5. A conductor according to any of the preceding claims, wherein the core comprises seven stranded bare wires.

6. A conductor according to any one of the preceding claims, wherein the conductor is applicable for use in a subsea umbilical, especially a subsea umbilical with limited gas and water build up.

7. The use of a conductor according to any of the preceding claims in the manufacture of an umbilical, preferably an umbilical for subsea application.

8. An umbilical comprising at least one electrical conductor according to any of claims 1-5, and optionally at least one of the elements belonging to the group comprising armoring wire, optical fiber line, fluid line and signal line.

9. An umbilical according to claim 7, suitable for subsea termination.

10. A method for manufacturing an electrical conductor according to any of claims 1-5, comprising the steps of passing the core stranded bare wires through a chamber containing a water immiscible viscous fluid before adding the outer insulating layer.

11. A method according to claim 9, wherein the water immiscible viscous fluid comprises Vaseline, petroleum jelly, thermoplastic petroleum jelly and/or silicone grease.
